# EUROPEAN PATENT SPECIFICATION

(11) **EP 0 643 676 B1**
(45) Date of publication and mention of the grant of the patent: **22.07.1998**
(21) Application number: 93903341.1
(22) Date of filing: 20.01.1993
(51) Int. Cl.: C02F 3/00, C02F 3/34

(54) **BIOLOGICAL AND CHEMICAL SINGLE STEP PURIFICATION OF DISCHARGED WATER**
EINSTUFIGE BIOLOGISCHE UND CHEMISCHE REINIGUNG VON ABWASSER
PROCEDE D'EPURATION BIOLOGIQUE ET CHIMIQUE EN UNE SEULE ETAPE DES EAUX USEES

(30) Priority: 22.01.1992 NO 920290
(43) Date of publication of application: 22.03.1995
(73) Proprietor: NORSKE MEIERIER, N-0187 Oslo (NO)
(72) Inventor: EIDE, Ola, N-0667 Oslo (NO); STORRO, Ivar, N-7033 Trondheim (NO); OTERHOLM, Bjarne, N-1430 Aas (NO)
(74) Representative: Onn, Thorsten
(86) International application number: NO9300016
(87) International publication number: WO9315023

(56) References cited:
- FR-A- 2 142 159
- GB-A- 2 167 399
- US-A- 4 436 624
- PATENT ABSTRACTS OF JAPAN, Vol. 9, No. 130, C-284; & JP,A,60 014 996 (Kokuzeicho), 25 January 1985 (25.01.85).

## Description

The invention relates to a method for the purification of discharged water from industrial plants, and more specifically a combination of a specific biological and a general chemical purification process. The Authorities and the community are demanding increasingly stricter standards for the discharge of waste water into the environment. In the following the invention will be explained with reference to discharged water from the dairy industry, but it may be used with every relevant purification process, where substances are to be converted to environmently friendly compounds.

There are today two main processes for the purification of discharged water based on biological and chemical techniques. The principle applied in biological purification is that living micro-organisms are used to metabolize pollutants into harmless compounds and gases.

One of the principles with chemical purification of discharged water from the food industry is that by lowering the pH almost to the isoelectric point of proteins, these are precipitated. With the addition of a flocculant and dispersed air the precipitated proteins will float together with fat which due to the density will float to the surface in a water solution. Sugar and other soluble components are not cleansed through this chemical method.

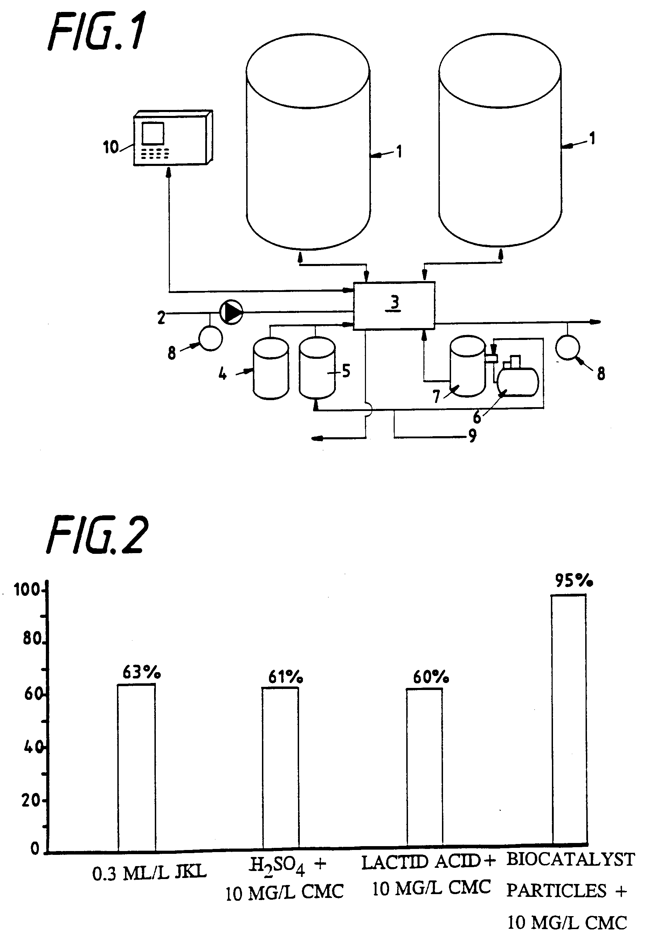

Chemical purification of discharged water from the food industry is in use or has been in use at several enterprises. Most plants use mineral acid together with a flocculant such as ferric chloride or CMC (carboxyl-methyl cellulose) to adjust pH and as a precipitant for protein which is removed together with fat through flotation or through the addition of dispersed air. If one should want to recover the protein in the chemical sludge for use in animal feed, other types of precipitants should preferably be used. There exists a batch-type plant where CMC is used as flocculant together with mineral acid, e.g. sulphuric acid and where the sludge is separated through flotation. Figure 1 is an example of such a plant.

The discharged water contains proteins, sugar and fat. It is desirable to obtain a better purification result by also purifying the soluble sugar from the water phase.

The procedure for purification of discharged water in process tanks where a flocculant and dispersed air are used is characterized in that biocatalyst particles with immobilizing micro-organisms or enzymes for conversion of waste products are added to the discharged water. The procedure is further characterized in that sugar, proteins or fat are converted to acid which precipitate the remaining proteins isoelectrically in a combined biological and chemical purification phase. The procedure is also characterized in that proteins and fat are recovered by means of flotation through the addition of a flocculant and dispersed air.

In the process described in the invention this addition of mineral acid is avoided in that in its place bacteria are added, for instance lactic acid bacteria which are immobilized in approximately monodispersed and gasfree biocatalyst particles. In this context biocatalyst means a biological system which comprises micro-organisms or cells, as well as parts of these, for instance enzymes. With biocatalyst particles is meant biocatalysts which are fixed (immobilized) by means of a microscopic carrier, for instance a hydro-colloid cell so that the system may carry out metabolic processes.

With the procedure according to the invention an automatic acid production takes place when these micro-organisms, for instance lactic acid bacteria, are converting sugar for instance into lactic acid in the discharged water. pH falls to the isoelectric point for proteins, and these precipitate. After an addition of a flocculant and dispersed air the desired purification of organic material is obtained through this combined use of biologic and chemical purification in one step. Thus proteins, fat and sugar are removed. A further advantage with this process may be that the flocculated mass may contain biocatalyst particles with for instance lactic acid bacteria which are a favourable component of animal feed.

In the following the process is explained with reference to Figure 1 which shows a simplified diagram of a batchwise flotation plant for the purification of discharged water from the food industry.

The flotation plant in Figure 1 is a downscaled industrial plant and is a batchwise plants with two process tanks (1) which are filled up alternately. In the experiments each process tank had a diameter of 1.4 m and they were able to treat up to 2.5 m³ discharged water per batch which was supplied via a pipe (2). On average the consumption of tap water (9) was 10-15% of the quantity of discharged water supplied (2).

The flotation plant was PLC controlled (10) (Programmable Logic Control). It was operated in such a way that pH in the process tank was adjusted to 4.2 when acid was added. Alternatively, pH may be adjusted by converting lactic sugar to organic acid, for instance lactic acid by using biocatalyst particles. Flocculant (approx. 8 mg/1 CMC) was added and flotation began. Otherwise the plant was equipped with a battery of pump valves (3), an acid tank (4), a tank for the flocculant (5), compressor (6), dispersion water tank (7) as well as sampling points (8).

The temperature and pH of the discharged water were continuously measured and recorded. During the production periods the temperature of the discharged water varied mostly between 10 and 50° C, with extreme values ranging from 5 to 55°. Normally the pH value in the discharged water was between pH 5 and pH 10. However, extreme values from pH 3.5 to Ph 12 were measured. Most of the time the pH value was on the alkaline side.

A characterization of the crude water, based on water-chemical analyses of a mixture of weekly samples and a mixture of samples during a 24 hour period is shown in Table 1.

**TABLE 1**

| | WEEKLY MIX | | | | 24 HOUR MIX | | | |
|---|---|---|---|---|---|---|---|---|
| | MEAN | MAX | MIN | NUMBER OF SAMPLES | MEAN | MAX | MIN. | NUMBER OF OF SAMPLES |
| Total COD, g/m³ | 3190 | 4730 | 1420 | 22 | 3310 | 8200 | 1070 | 44 |
| Filtered COD, g/m³ | 1050 | 2290 | 650 | 3 | 1410 | 3546 | 433 | 36 |
| Total BOD₇ g/m³ | 1950 | 2200 | 1670 | 3 | | | | |
| Filtered BOD₇ g/m³ | 970 | 1100 | 640 | 3 | | | | |
| Total BOD₇ COD | 0.59 | 0.65 | 0.52 | 3 | | | | |
| Filtered BOD₇/, | 0.74 | 0.75 | 0.56 | 3 | | | | |
| Total P, g/m³ | 6.7 | 12.1 | 4.4 | 28 | 8.5 | 26.4 | 1.0 | 31 |
| Total N, g/m³ | 43 | 46 | 33 | 3 | | | | |
| Suspended substances (SS) g/m³ | | | | | 820 | 3000 | 220 | 28 |
| Fat, g/m³ | | | | | 690 | 1900 | 270 | 16 |
| Table 1. Characterization of non-purified dairy discharge water in the period week 13 to week 37 1990, based on mixed 24 hour samples and mixed weekly samples, with proportionate water quantity. The dairy is a plant based on special milk products for consumption. COD=chemical oxygen consumption, BOC=biological oxygen consumption, P=phosphorous, N=Nitrogen | | | | | | | | |

The mean value for total COD (Chemical Oxygen Demand) shows a concentration of 3200-3300 g/m³. However, there were relatively large variations from week to week, and especially from one day to another. 24-hour emissions with concentrations up to 2.5 times higher than the mean values for organic compounds were registered. It is important to take these variations into account when dimensioning a purification plant.

When testing various purification processes a batchwise flotation plant in laboratory scale was used. With the laboratory plant it is possible to test a larger number of precipitants in a relatively short time. In order to obtain optimal purification effect of the given flocculants, it is customary to adjust pH by adding a mineral acid, for instance sulphuric acid. There was a desire to use the laboratory plant to test the adjusting of pH with lactic acid as an alternative to sulphuric acid.

A survey was performed in the plant of combinations of various precipitants and flocculants. Table 2 provides an overview of alternative combinations.

**Table 2**

| Alt. | pH adjustment | Flocculant |
|---|---|---|
| 1 | H₂SO₄ | Ferric chloride |
| 2 | H₂SO₄ | Ultrazine |
| 3 | H₂SO₄ | CMC |
| 4 | Lactic acid | CMC |
| 5 | Biocatalyst particles | CMC |
| Table 2. Alternative combinations in the laboratory flotation plant. | | |

The tests with the laboratory flotation plant showed that use of Ultrazine gave the poorest result. This process variant therefore was considered the least interesting alternative. The bar diagram in Figure 2 sums up which purifying effects may be achieved under optimal conditions with four other combinations. Ferric chloride (JCL) removed 2-3% more of total COD than H₂SO₄+CMC, which in turn removed 1-2% more of total COD than lactic acid + CMC. It is possible with biocatalyst particles to remove over 30% more of total COD than with the other methods, since sugar is also removed through this method. Protein was removed somewhat more efficiently with ferric chloride than with the other combinations. However, this is not a very advantageous method when the process concentrate (the sludge) is to be used as animal feed.

On the basis of the test results, table 3 gives a proposal for the precipitation, coagulation and flotation conditions for chemical purification of discharged water from dairies, and for combined biological and single-step chemical purification of discharged water from a dairy.

**Table 3**

| Flocculant type | Flocculant dosage | pH adjusting component | Desired pH | Dispersion water qty. |
|---|---|---|---|---|
| FCL | 0.3 ml/l | H₂SO₄ or NaOH | 4.5-5.5 | 20% |
| CMC | 6-10 mg/1 | H₂SO₄ | 4.1-4.3 | 10% |
| CMC | 6-10 mg/l | Lactic acid | 4.1-4.3 | 10% |
| CMC | 6-10 mg/l | Biocatalyst particles | 4.1-4.3 | 10% |

The use of lactic acid direct as an alternative to sulphuric acid for pH adjustment is most interesting. Particularly because lactic acid is an advantage if the sludge is to be used for animal feed. The laboratory tests showed that the use of lactic acid resulted in a purification factor which was only insignificantly lower than with the use of sulphuric acid.

By adding spherical biocatalyst particles together with e.g. immobilized anaerobic micro-organisms, e.g. lactic acid bacteria, the same precipitation of protein is achieved as by adding lactic acid when the bacteria converted the sugar in the discharged water to organic acids, for instance lactic acid. By adding bacteria to these particles it is thus possible to achieve good purification results since none of the other methods removes sugar. The addition of acid is avoided since the bacteria convert the sugar to lactic acid, and the sludge will after dehydration to process concentrate be well suited for use in animal food mixtures. By using gasifying micro-organisms, e.g. hetero-fermentable lactic acid bacteria, alternatively facultative anaerobic micro-organisms, the resulting gas production will help reduce the need for dispersed air used for the flotation of the protein material.

The biocatalyst particles to be used may be produced by any appropriate method, and one method is e.g. described in a parallel patent application, cp. No. C29881.

The invention is mainly described with reference to the use of lactic acid bacteria, but the process is not limited to using these bacteria. The type of bacteria may vary according to the substances and compounds one wishes to convert into harmless, eco-friendly products. In the place of bacteria, enzymes may also be used in the biocatalyst particles in order to metabolise special compounds.

## Claims

1. A method for the purification of discharged water in process tanks where a flocculant and dispersed air in water are used and said water contains proteins and/or fats and sugar, **characterized** in that biocatalyst particles with immobilized micro-organisms or enzymes are added, said micro-organisms or enzymes being functional to convert the sugar into acid, and thereby lowering the pH whereupon the proteins and/or fats are precipitated by means of said flocculant and dispersed air.

2. A method according to claim 1, **characterized** in that sugar, proteins or fat is converted into acid, which precipitates the remaining proteins isoelectrically in a combined biological and chemical purification step.

3. A method according to claims 1-2, **characterized** in that proteins and fat are recovered by means of floatation through the addition of a flocculant and dispersed air.

4. A method according to claims 1-3, **characterized** in that immobilized gasifying micro-organisms are added.

5. A method according to claims 1-4, **characterized** in that flotation is performed in such way, as to result in a process concentrate, which e.g. may be used as animal feed.

6. A method according to claim 5, **characterized** in that biocatalyst particles become part of the process concentrate.

7. A method according to claims 1-6, **characterized** in that the temperature in the process water is kept between 10 and 50 °C.

## Patentansprüche

1. Verfahren zur Reinigung Von Abwasser in Prozeßtanks, bei dem ein Ausflockungsmittel und in Wasser dispergierte Luft vorwendet werden und dieses Wasser Proteine und/oder Fette und Zucker enthält, dadurch gekennzeichnet, daß Biokatalysator-Partikel mit Immobilisierten Mikroorganismen oder Enzymen zugegeben werden, wobei die Mikroorganismen oder Enzyme zur Umwandlung des Zuckers in Säure funktionell sind und dadurch der pH-Wert gesenkt wird, woraufhin die Proteine und/oder Fette mit Hilfe des Ausflockungsmittels und der dispergierten Luft ausgefällt werden.

2. Verfahren nach Anspruch 1, dadurch gekennzeichnet, daß Zucker, Proteine oder Fett zu Säure umgewandelt wird, die die verbliebenen Proteine in einem kombinierten biologischen und chemischen Reinigungsschritt isoelektrisch ausfällt.

3. Verfahren nach Anspruch 1-2, dadurch gekennzeichnet, daß Proteine und Fett mit Hilfe von Flotation durch die Zugabe eines Ausflockungsmittels und dispergierter Luft rückgewonnen werden

4. Verfahren nach Anspruch 1-3, dadurch gekennzeichnet daß immobilisierte vergasende Mikroorganismen zugegeben werden.

5. Verfahren nach Anspruch 1-4, dadurch gekennzeichnet, daß die Flotation in solcher Weise vorgenommen wird, daß sie ein Prozeßkonzentrat ergibt, das z.B. als Tierfutter verwendet werden kann.

6. Verfahren nach Anspruch 5, dadurch gekennzeichnet, daß Biokatalysator-Partikel Teil des Prozeßkonzentrats werden.

7. Verfahren nach Anspruch 1-6, dadurch gekennzeichnet, daß die Temperatur im Prozeßwasser auf zwischen 10 und 50°C gehalten wird.

## Revendications

1. Procédé pour la purification d'eau déchargée dans des réservoirs de traitement où un floculant et de l'air dispersé dans de l'eau sont utilisés et ladite eau contient des protéines et/ou des graisses et du sucre, caractérisé en ce que des particules de biocatalyseur avec des micro-organismes ou des enzymes immobilisé(e)s sont ajoutées, lesdits micro-oranismes ou enzymes étant aptes à convertir le sucre en acide, ce qui abaisse le pH, après quoi les protéines et/ou les graisses sont précipitées au moyen desdits floculant et air dispersé.

2. Procédé selon la revendication 1, caractérisé en ce que le sucre, les protéines ou la graisse sont convertis en acide, ce qui précipite les protéines restantes isoélectriquement dans unes une étape de purification biologique et chimique combinée.

3. Procédé selon les revendications 1-2, caractérisé en ce que les protéines et la graisse sont récupérés par flottation par l'addition d'un floculant et d'air dispersé.

4. Procédé selon les revendications 1-3, caractérisé en ce que des micro-organismes gazéifiants immobilisés sont ajoutés.

5. Procédé selon les revendications 1-4, caractérisé en ce que la flottation est effectuée de façon à fournir un concentré de traitement qui peut être utilisé, par example, en tant qu'aliment pour animaux.

6. Procédé selon la revendication 5, caractérisé en ce que les particules de biocatalyseur s'intègrent au concentré de traitement.

7. Procédé selon les revendications 1-6, caractérisé en ce que la température dans l'eau de traitement est maintenue entre 10 et 50 °C.
